# EUROPÄISCHE PATENTANMELDUNG

(11) **EP 4 745 421 A1**
(43) Veröffentlichungstag der Anmeldung: **20.05.2026**
(21) Anmeldenummer: 24213763.6
(22) Anmeldetag: 19.11.2024
(51) Int. Cl.: F16D 1/076

(54) **WELLE-NABE-VERBINDUNG FÜR WINDKRAFTANLAGE**

(71) Anmelder: Flender GmbH, 46395 Bocholt (DE)
(72) Erfinder: HAMBRECHT, Dr. Ralf, 46395 Bocholt (DE); JANSEN, Andre, 46395 Bocholt (DE)
(74) Vertreter: Michalski Hüttermann & Partner Patentanwälte mbB

(57) **Zusammenfassung**

Welle-Nabe-Verbindung 10 für eine Windkraftanlage 100, insbesondere für die Verbindung einer Rotorwelle 118 mit einem Getriebe 110, mit einem Wellenelement 12 und einem Nabenelement 14, die beide konzentrisch zu einer Längsachse A_{L} angeordnet sind, wobei das Wellenelement 12 und das Nabenelement 14 zumindest zwei aus Planstirnverzahnungen 16 gebildete Verzahnungspaarungen 18 ausbilden und die Verzahnungspaarungen 18 in zwei getrennt voneinander verlaufenden Radialbereichen 20 angeordnet sind. Die Welle-Nabe-Verbindung 10 nutzt die Leistungsfähigkeit einer planseitig aufgebrachten Planstirnverzahnung 16, die eine hohe Drehmomentdichte erlaubt und durch eine axiale Montagebewegung geführt und einfach geschlossen werden kann.

## Beschreibung

Die Erfindung betrifft eine Welle-Nabe-Verbindung für eine Windkraftanlage, insbesondere zur Verbindung einer Rotorwelle mit einem Getriebe und/oder eines Getriebes mit einem Generator, mit einem Wellenelement und einem Nabenelement, die beide konzentrisch zu einer Längsachse A_{L} angeordnet sind, wobei das Wellenelement und das Nabenelement zumindest zwei aus Planstirnverzahnungen gebildete Verzahnungspaarungen ausbilden.

Moderne Windkraftanlagen werden aufgrund begrenzter Aufstellflächen und Kostendruck hin zu immer größeren Leistungen entwickelt. Damit einhergehend werden die Transportgewichte und Komponentenabmessungen so groß, dass Transport und Handhabung eines in einer Produktionshalle vormontierten Antriebsstrangs mit der verfügbaren Standardlogistik (Transportmittel und Hebezeuge) nicht mehr durchführbar sind. Die Triebstrangkomponenten werden daher separat zum Aufstellort der Windturbine gebracht. Vor Ort werden dann die Komponenten zum Triebstrang zusammengefügt. Raue Umgebungs- und Witterungsbedingungen, eingeschränkte Möglichkeiten der exakten Ausrichtung der Komponenten zueinander mit Baustellenausrüstung, kurze Zeitspannen aufgrund geeignetem Witterungsfenster, teure Kranmiete und der Einsatz von ggf. wenig geschultem Personal machen eine einfache und robuste Verbindungsmöglichkeit der Triebstrangkomponenten nötig. Die Verbindung zwischen Hauptlagerwelle und Getriebe bzw. zwischen Getriebe und Generator kann unter Berücksichtigung der stetig zunehmenden Drehmomentdichte zweckmäßigerweise formschlüssig erfolgen. Alternativ kann auch eine rein reibschlüssige Verbindung Verwendung finden. Der Nachteil dabei sind die relativ großen Bauteilabmessungen, wie bspw. Durchmesser zur Dreh- und Biegemomentübertragung sowie empfindliche Oberflächen, die zur Reibwerterhöhung üblicherweise speziell behandelt sind und auf raue Umgebungsbedingungen oder wiederholte Montagevorgänge empfindlich reagieren. Dies gilt nicht nur aber auch für die Verbindung zwischen Hauptlagerwelle und Getriebe, für die eine einfache und robuste Verbindungsmöglichkeit nicht existiert. Als Stand der Technik zu nennen in diesem Zusammenhang ist die GB 2509560 A. Ausgehend hiervon besteht ein ständiges Bedürfnis durch geeignete Maßnahmen die Verbindung zwischen Hauptlagerwelle und Getriebe im Hinblick auf die Montage und die gestiegene Leistungsdichte zu verbessern.

Es ist die Aufgabe der Erfindung Maßnahmen aufzuzeigen, die die Verbindung zwischen Hauptlagerwelle und Getriebe sowie zwischen Getriebe und Generator im Hinblick auf die Montage und die gestiegene Leistungsdichte verbessern.

Die Lösung der Aufgabe erfolgt durch eine Welle-Nabe-Verbindung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Welle-Nabe-Verbindung für eine Windkraftanlage, insbesondere zur Verbindung einer Rotorwelle mit einem Getriebe und/oder eines Getriebes mit einem Generator, mit einem Wellenelement und einem Nabenelement, die beide konzentrisch zu einer Längsachse A_{L} angeordnet sind, wobei das Wellenelement und das Nabenelement zumindest zwei aus Planstirnverzahnungen gebildete Verzahnungspaarungen ausbilden und die Verzahnungspaarungen in zwei getrennt voneinander verlaufenden Radialbereichen angeordnet sind.

Eine Verzahnungspaarung zeichnet ich dadurch aus, dass sich die eine der Verzahnungen auf dem Wellenelement und die andere der Verzahnungen auf dem Nabenelement befindet. Die Längsrichtung A_{L} legt vorliegend die Axialrichtung fest, so dass sich aus dieser die jeweiligen Radialrichtungen ergeben. Das Wellenelement kann vorliegend als Rotorwelle einer Hauptlagereinheit für eine Windkraftanlage ausgeführt sein. Hierbei kann das Wellenelement als Hohlwelle ausgeführt sein. Das Nabenelement kann vorliegend als ein Antriebselement eines Getriebes ausgeführt sein.

Durch die vorgeschlagene Welle-Nabe-Verbindung kann das beispielsweise als Rotorwelle ausgeführte Wellenelement mit einem beispielsweise als Getriebeplanetenträger ausgeführten Nabenelement durch einfache axiale Fügebewegung formschlüssig verbunden werden. Dabei ist es nicht nötig durch Kühlung oder Erwärmung einen Presssitz zu realisieren oder Formschluss durch exakte Ausrichtung von Bohrungen zum Einsatz von Passstiften oder im Durchmesser sich expandierende Bolzen herzustellen. Die Verbindung zentriert sich beim axialen Zusammenführen von Wellenelement und Nabenelement und wird automatisch richtig in Umfangsrichtung positioniert. Die Verbindung ermöglicht eine robuste und einfache Montage und erlaubt die Übertragung von Kräften sowie Drehmomenten und Biegemomenten mit hoher Drehmomentdichte. Zudem können spannungsoptimierte Zahnflanken und eine Zahnfußgeometrie vorgesehen sein.

Die vorgeschlagene Welle-Nabe-Verbindung nutzt die Leistungsfähigkeit einer planseitig aufgebrachten Stirnverzahnung, die eine hohe Drehmomentdichte erlaubt und durch eine axiale Montagebewegung gefügt und einfach geschlossen werden kann. Anders als mit teuren Verzahnungsmaschinen bzw. aufwändigem Prozess, wie für die bekannten Hirth-Verzahnungen üblich, wird hier auf einfache Stirnfräsbearbeitung zurückgegriffen, bspw. einen 5-Achs-Fingerfräsprozess. Durch Aufteilung der Stirnverzahnung auf zwei Verzahnungspaarungen in zwei getrennt voneinander verlaufenden Radialbereichen werden durch eine Spannungsentlastung kritische Doppelkerben vermieden. Es wird eine hohe Drehmomentdichte und ein verringerter Anschlussdurchmesser der Welle-Nabe-Verbindung durch den Formschluss der Stirnverzahnung erreicht.

Bevorzugt sind das Wellenelement und das Nabenelement zwischen Verzahnungspaarungen über eine umlaufende Verschraubung miteinander verbunden. Hierdurch bleibt die Montageposition auch unter Beaufschlagung von Betriebslasten geschlossen. Insbesondere kann vorgesehen sein, dass eine vorgespannte Schraubverbindung zum Einsatz kommt, die lediglich den Positionserhalt der Bauteile sichert, aber nicht ein Durchrutschen eines Reibschlusses verhindern muss. Zudem ist bevorzugt, dass die Verschraubung eine Mehrzahl umfänglich verteilt angeordnete und axial gerichteter Verschraubungselemente umfasst. Indem über den Formschluss, der über die Stirnverzahnung gewährleistet ist, das Drehmoment übertragen wird, kann die Anzahl der Verschraubungselemente und damit die axiale Vorspannkraft reduziert werden. Zudem kann ein Zahnflankenwinkel selbsthemmend oder nicht selbsthemmend ausgeführt sein, so dass ein betriebsbedingtes Drehmoment zu einer Axialkraft führt, durch die die Schraubenvorspannung kompensiert wird.

In einer bevorzugten Ausgestaltung ist vorgesehen, dass das Wellenelement oder das Nabenelement einen radial außerhalb oder radial innerhalb der Planstirnverzahnung angeordneten und axial gerichteten Zentrierkragen oder Zentrierkonus aufweist. Hierdurch wird ein in axialer Richtung montierbarer Formschluss mit der Fähigkeit der Selbstzentrierung gewährleitet. Zusätzlich können noch Zentrierphasen am jeweiligen Innenteil oder Außenteil vorgesehen sein, um über eine Konizität noch eine verbesserte Selbstzentrierung zu erreichen.

In einer zudem bevorzugten Ausgestaltung ist vorgesehen, dass die Radialbereiche, in denen die Verzahnungspaarungen angeordnet sind, in Richtung der Längsachse A_{L} versetzt zueinander liegen. Durch diese axial abgesetzte Planstirnverzahnung ist eine verbesserte Lastleitung in die Bauteile gewährleistet. Insbesondere bevorzugt ist hierbei, dass der axiale Versatz bezogen auf das Nabenelement derart ausgestaltet ist, der äußere Radialbereich gegenüber dem inneren Radialbereich in Richtung der Längsachse A_{L} zurücksteht.

In einer bevorzugten Ausgestaltung bildet das Wellenelement und/oder das Nabenelement in Richtung des jeweils anderen Elements ragende und in diesen eingreifende Positionierdorne aus. Feste Positionierdorne zur positionsgenauen Selbstausrichtung in Umfangsrichtung sind insbesondere dann vorteilhaft, wenn sogenannten Kopftragen vermieden werden soll. Es kann aber auch vorgesehen sein, dass die Positionierdorne lösbar ausgeführt sind, die nach der Montage der Welle-Nabe-Verbindung wieder entfernt werden.

In einer bevorzugten Ausgestaltung sind die Planstirnverzahnungen in einer der jeweiligen Stirneben des Wellenelements und des Nabenelements bezüglich jeweiliger radialer Richtungen unter einem Winkel schräggestellt.

In einer bevorzugten Ausgestaltung sind jeweilige Stirnebenen des Wellenelements und des Nabenelements, in denen die Planstirnverzahnungen angeordnet sind, ausgehend von der Längsachse A_{L} komplementär zueinander kegelförmig ausgeformt.

Die Aufgabe wird zudem gelöst durch einen Antriebsstrang für eine Windkraftanlage zur drehmomentübertragenden Verbindung eines Rotors mit einem Generator, umfassend eine Hauptlagereinheit, eine Hauptwelle und ein über die Hauptwelle angetriebenes Getriebe, wobei das Getriebe den Generator zumindest mittelbar antreibt, wobei die Verbindung zwischen Hauptwelle und Getriebe als Welle-Nabe-Verbindung wie beschrieben ausgebildet ist. Hierbei kann insbesondere vorgesehen sein, dass die Hauptwelle als Wellenelement und ein Planetenträger des Getriebes als Nabenelement ausgeführt sind. Bevorzugt sind die Planstirnverzahnungen der Verzahnungspaarungen, d.h. die formschlüssigen Geometrien, jeweils unmittelbar an die Hauptwelle und den Planetenträger angearbeitet. Es können aber auch Adaptionsscheiben mit jeweiliger Planstirnverzahnung für Rotorwelle und Planetenträger vorgesehen sein. Diese können auf einem vorhandenem Maschinenpark in der Fertigungshalle und mit guter Fertigungsgenauigkeit mit Formschluss, z.B. Passbohrung/Passstift, gefertigt und an Rotorwelle und Planetenträger vormontiert werden und aus höherfestem, verschleißarmen oder beschichtetem Material gefertigt sein.

Die Aufgabe wird weiterhin gelöst durch eine Windkraftanlage, umfassend einen Rotorflanschmit einem Rotor und einen Generator, wobei ein an einem Maschinenträger gehaltener und den Rotorflansch mit dem Generator verbindender Antriebsstrang vorgesehen ist, wobei der Antriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung eines Antriebsstrangs einer Windkraftanlage,
Fig. 2: eine perspektivische Schnittansicht einer Welle-Nabe-Verbindung für eine Windkraftanlage nach Figur 1,
Fig. 3a) und 3b): Einzelheiten einer Welle-Nabe-Verbindung gemäß Fig. 2,
Fig. 4: eine weitere Ausführungsform einer Welle-Nabe-Verbindung,
Fig. 5, 6a) und 6b): weitere schematische Darstellungen einer Welle-Nabe-Verbindung mit Einzelheiten und
Fig. 7: eine schematische Darstellung einer weiteren Ausführungsform einer Welle-Nabe-Verbindung als Getriebe-Generator-Schnittstelle.

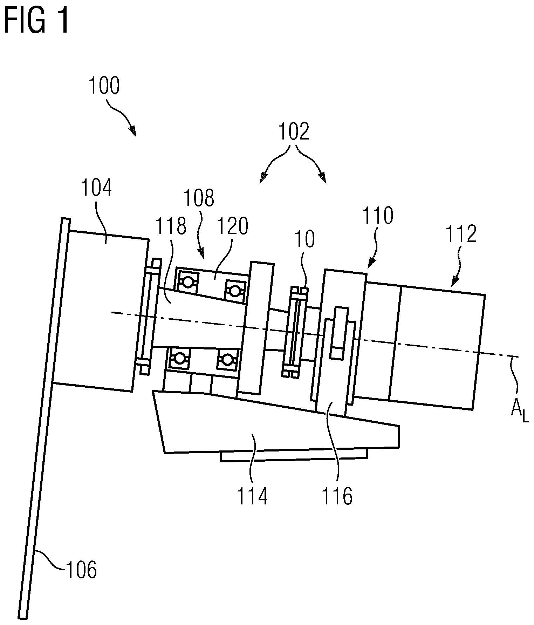

Die Figur 1 zeigt in schematischer und nicht maßstabsgetreuer Darstellung eine Windkraftanlage 100 in einer möglichen Ausführung. Gezeigt ist eine Seitendarstellung. Wesentliches Element der Windkraftanlage 100 ist ein Antriebstrang 102, der vorliegend strukturell einen Rotorflansch 104 mit einem Rotor 106, eine Rotorlagerung 108, ein Getriebe 110 und einen Generator 112 umfassen kann. Über einen Maschinenträger 114 werden zumindest die Rotorlagerung 108 und der Generator 112 über einen nicht dargestellten Turm auf einem Boden abgestützt. Die Rotorlagerung 108 umfasst eine Rotorwelle 118, die z.B. über eine angestellte Kegelrollenlagerung gegenüber einem Rotorlagergehäuse 120 der Rotorlagerung 108 drehbar um eine Triebstrangachse A_{D} gelagert ist. Die Triebstrangachse bzw. Längsachse A_{L} bestimmt eine axiale Richtung.

An einem Ende der Rotorwelle 118 ist der Rotorflansch 104 und an diesem der Rotor 106 gehalten. Ein Getriebe 110 ist antriebsmäßig mit dem Generator 112 verbunden. Über eine Welle-Nabe-Verbindung 10 ist die Rotorwelle 118 mit dem Getriebe 110 verbunden. Ein Reaktionsmoment des Getriebes 110 - und auch des angeflanschtes Generators 112 - ist über eine Drehmomentstütze 116 gegenüber dem Maschinenträger 114 abgestützt. Hierbei kann in einer ersten Variante die Drehmomentstütze 116 - wie in der Figur 1 dargestellt - die Getriebekomponente 12 unmittelbar mit dem Maschinenträger 114 verbinden. Der Maschinenträger 114, die Rotorlagerung 108 mit Rotorwelle 118, die Drehmomentstütze 116, das Getriebe 110 und der Generator 112 können als Antriebsstrang 102 bezeichnet werden.

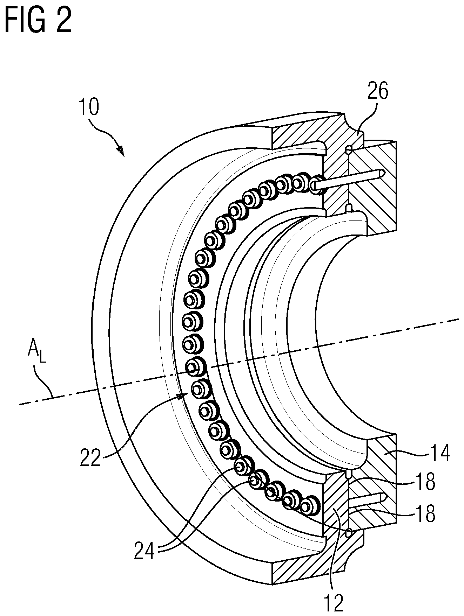

Die Figur 2 zeigt in einer perspektivischen Ansicht einen Schnitt der Welle-Nabe-Verbindung 10. Die Welle-Nabe-Verbindung 10 umfasst strukturell ein Wellenelement 12 und ein Nabenelement 14. Hierbei ist beispielsweise das Wellenelement 12 der Rotorwelle 118 und das Nabenelement dem Getriebe 110 zugeordnet. Wellenelement 12 und Nabenelement 14 sind beide konzentrisch zu der Längsachse A_{L} angeordnet.

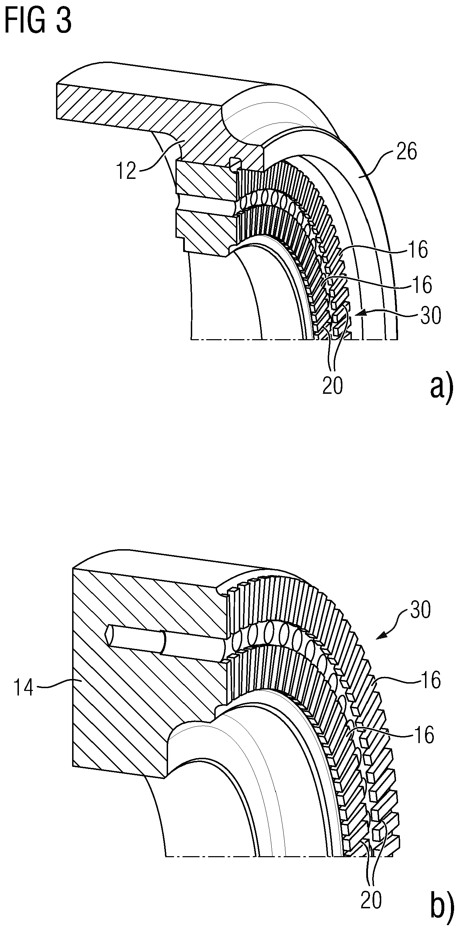

Die Figuren 3a) und 3b) zeigen das Wellenelement 12 und das Nabenelement 14 als Einzelheit in einem Schnitt und in perspektivischer Darstellung. Die Figuren 2 bis 3b) werden zunächst gemeinsam beschrieben. Das Wellenelement 12 und das Nabenelement 14 bilden jeweils Planstirnverzahnungen 16 aus. Sowohl auf dem Wellenelement 12 als auch auf dem Nabenelement 14 ist die Planstirnverzahnungen 16 in zwei getrennt voneinander verlaufenden Radialbereichen 20 angeordnet. In einem Zusammenbau von Wellenelement 12 und Nabenelement 14, wie in Figur 2 gezeigt, bilden die Planstirnverzahnungen 16 Verzahnungspaarungen 18 aus, über die in einer Betriebssituation ein Drehmoment übertragen werden kann. Das Wellenelement 12 und das Nabenelement 14 sind zwischen den Verzahnungspaarungen 18 über eine umlaufende Verschraubung 22 miteinander verbunden, die eine Mehrzahl umfänglich verteilt angeordnete und axial gerichteter Verschraubungselemente 24 in Gestalt von Dehnschrauben umfasst.

Vorliegend weist das Wellenelement 12 einen radial außerhalb der Planstirnverzahnung 16 angeordneten und axial gerichteten Zentrierkragen 26 auf. Alternativ kann auch vorgesehen sein, dass das Nabenelement 14 den Zentrierkragen 26 aufweist, was aber nicht eigens dargestellt ist.

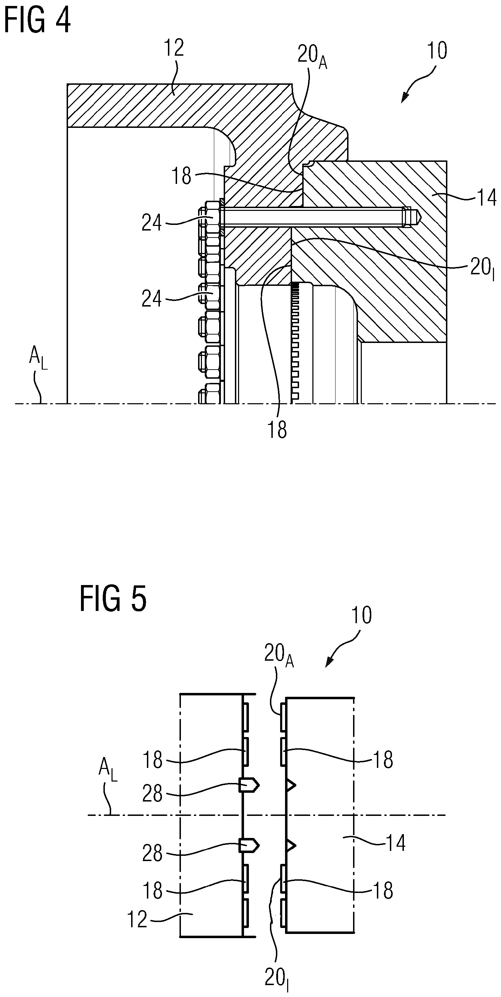

Die Figur 4 zeigt eine weitere Ausführungsform der Welle-Nabe-Verbindung 10, bei der die Radialbereiche 20, in denen die Verzahnungspaarungen 18 angeordnet sind, in Richtung der Längsachse A_{L} versetzt zueinander liegen. Der axiale Versatz bezogen auf das Nabenelement 14 ist derart ausgestaltet, der äußere Radialbereich 20_{A} gegenüber inneren Radialbereich 20_{I} in Richtung der Längsachse A_{L} zurücksteht.

Die Figur 5 zeigt schematisch die Welle-Nabe-Verbindung 10 in einer Seitenansicht. Das Wellenelement 12 bildet in Richtung des Nabenelements 14 ragende und in dieses eingreifende Positionierdorne 28 aus. Es kann vorgesehen sein, dass die Positionierdorne 28 lösbar ausgeführt sind.

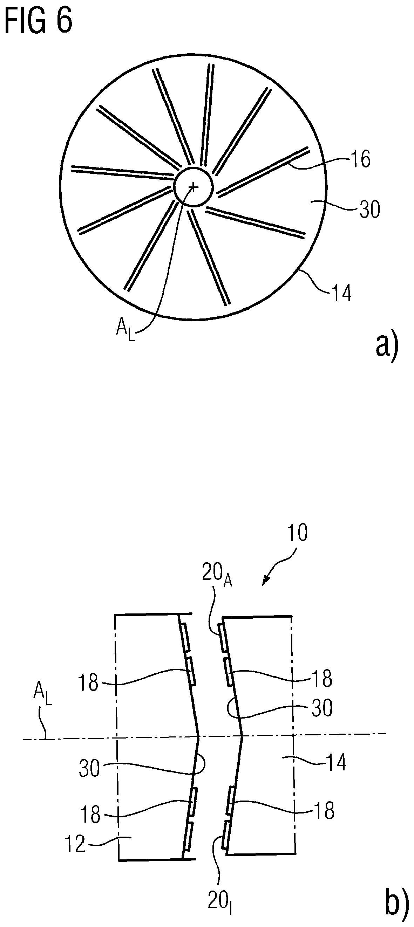

Die Figur 6a) zeigt eine Axialansicht des Nabenelements 14. Zu erkennen ist die die Stirnebene 30 des Nabenelements 14, auf der rein schematisch die Planstirnverzahnung 16 dargestellt ist. Die Planstirnverzahnungen 16 sind in einer Stirnebene 30 des Nabenelements 14 bezüglich jeweiliger radialer Richtungen unter einem Winkel schräggestellt. Eine entsprechende bzw. komplementäre Schrägstellung weist die Planstirnverzahnungen 16 auf dem Wellenelement 12 auf. Die Figur 6b) zeigt schematisch die Welle-Nabe-Verbindung 10 in einer Seitenansicht. Die jeweiligen Stirnebenen 30 des Wellenelements 12 und des Nabenelements 14, in denen die Planstirnverzahnungen 16 angeordnet sind, sind ausgehend von der Längsachse A_{L} komplementär zueinander trichterförmig ausgeformt.

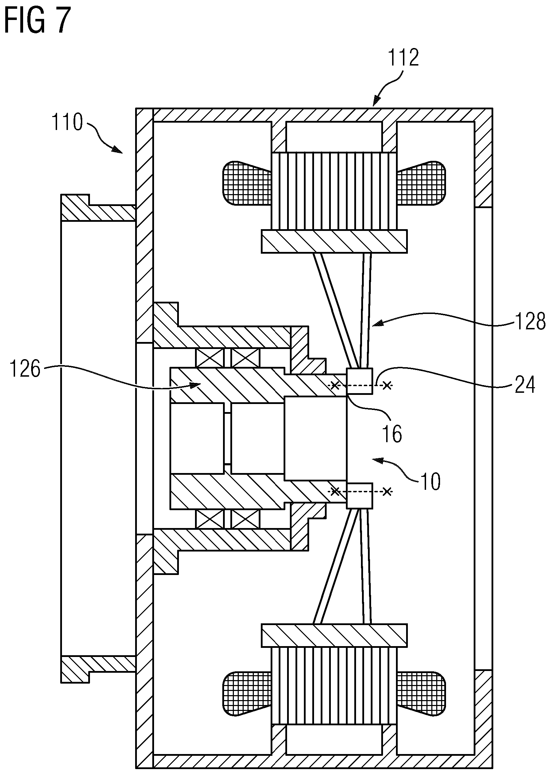

Die Figur 7 zeigt eine schematische Darstellung einer weiteren Ausführungsform einer Welle-Nabe-Verbindung 10. Die Welle-Nabe-Verbindung 10 ist als Getriebe-Generator-Schnittstelle ausgeführt. Das Getriebe 110 und der Generator 112 sind lediglich ausschnittsweise dargestellt. Das Getriebe 110 weist eine Getriebeausgangswelle 126 auf, die vorliegend als Wellenelement 12 ausgeführt ist. Der Generator 112 weist einen Generatorrotor 128 auf, der vorliegend als Nabenelement 14 ausgeführt ist. Die Planstirnverzahnungen 16 sind jeweils unmittelbar an die Getriebeausgangwelle 126 und den Generatorrotor 128 angearbeitet.

### Bezugszeichenliste

- 10: Welle-Nabe-Verbindung
- 12: Wellenelement
- 14: Nabenelement
- 16: Planstirnverzahnung
- 18: Verzahnungspaarung
- 20: Radialbereich
- 22: Verschraubung
- 24: Verschraubungselement
- 26: Zentrierkragen
- 28: Positionierdorne
- 30: Stirnebene
- 100: Windkraftanlage
- 102: Antriebstrang
- 104: Rotorflansch
- 106: Mehrblattrotor
- 108: Rotorlagerung
- 110: Getriebe
- 112: Generator
- 114: Maschinenträger
- 116: Drehmomentstütze
- 118: Rotorwelle
- 120: Rotorlagergehäuse
- 124: Generatorwelle
- 126: Getriebeausgangswelle
- 128: Generatorrotor

## Patentansprüche

1. Welle-Nabe-Verbindung (10) für eine Windkraftanlage (100), insbesondere zur Verbindung einer Rotorwelle (118) mit einem Getriebe (110) und/oder eines Getriebes (110) mit einem Generator (112), mit
einem Wellenelement (12) und einem Nabenelement (14), die beide konzentrisch zu einer Längsachse (A_{L}) angeordnet sind,
wobei das Wellenelement (12) und das Nabenelement (14) zumindest zwei aus Planstirnverzahnungen (16) gebildete Verzahnungspaarungen (18) ausbilden und die Verzahnungspaarungen (18) in zwei getrennt voneinander verlaufenden Radialbereichen (20) angeordnet sind.

2. Welle-Nabe-Verbindung (10) nach Anspruch 1, **dadurch gekennzeichnet, dass** das Wellenelement (12) und das Nabenelement (14) zwischen den Verzahnungspaarungen (18) über eine umlaufende Verschraubung (22) miteinander verbunden sind.

3. Welle-Nabe-Verbindung (10) nach Anspruch 2, **dadurch gekennzeichnet, dass** die Verschraubung (22) eine Mehrzahl umfänglich verteilt angeordnete und axial gerichteter Verschraubungselemente (24) umfasst.

4. Welle-Nabe-Verbindung (10) nach einem der Ansprüche 1 bis 3, **dadurch gekennzeichnet, dass** das Wellenelement (12) oder das Nabenelement (14) einen radial außerhalb oder radial innerhalb der Planstirnverzahnung (16) angeordneten und axial gerichteten, insbesondere konisch zulaufenden, Zentrierkragen (26) aufweist.

5. Welle-Nabe-Verbindung (10) nach einem der Ansprüche 1 bis 4, **dadurch gekennzeichnet, dass** die Radialbereiche (20), in denen die Verzahnungspaarungen (18) angeordnet sind, in Richtung der Längsachse (A_{L}) versetzt zueinander liegen.

6. Welle-Nabe-Verbindung (10) nach Anspruch 5, **dadurch gekennzeichnet, dass** der axiale Versatz bezogen auf das Nabenelement (14) derart ausgestaltet ist, der äußere Radialbereich (20_{A}) gegenüber inneren Radialbereich (20_{I}) in Richtung der Längsachse (A_{L}) zurücksteht.

7. Welle-Nabe-Verbindung (10) nach einem der Ansprüche 1 bis 6, **dadurch gekennzeichnet, dass** das Wellenelement (12) und/oder das Nabenelement (14) in Richtung des jeweils anderen Elements ragende und in dieses eingreifende, vorzugsweise lösbar ausgeführte, Positionierdorne (28) ausbildet.

8. Welle-Nabe-Verbindung (10) nach einem der Ansprüche 1 bis 7, **dadurch gekennzeichnet, dass** die Planstirnverzahnungen (16) in einer der jeweiligen Stirnebene (30) des Wellenelements (12) und des Nabenelements (14) bezüglich jeweiliger radialer Richtungen unter einem Winkel schräggestellt sind.

9. Welle-Nabe-Verbindung (10) nach einem der Ansprüche 1 bis 8, **dadurch gekennzeichnet, dass** jeweilige Stirnebenen (30) des Wellenelements (12) und des Nabenelements (14), in denen die Planstirnverzahnungen (16) angeordnet sind, ausgehend von der Längsachse (A_{L}) komplementär zueinander kegelförmig ausgeformt sind.

10. Antriebsstrang (102) für eine Windkraftanlage (100) zur drehmomentübertragenden Verbindung eines Rotors (106) mit einem Getriebe (110) und einem Generator (112), **dadurch gekennzeichnet, dass** zumindest eine Verbindung zwischen dem Rotor (106) und dem Getriebe (110) und/oder zwischen dem Getriebe (110) und dem Generator (112) als Welle-Nabe-Verbindung (10) nach einem der Ansprüche 1 bis 9 ausgebildet ist.

11. Antriebsstrang (102) nach Anspruch 11, **dadurch gekennzeichnet, dass** die Verbindung zwischen einer Hauptwelle (118) einer Hauptlagereinheit (108) und dem Getriebe (110) als Welle-Nabe-Verbindung (10) ausgebildet ist.

12. Antriebsstrang (102) nach Anspruch 11, **dadurch gekennzeichnet, dass** die Hauptwelle als Wellenelement (12) und ein Planetenträger des Getriebes (110) als Nabenelement (14) ausgeführt sind.

13. Antriebsstrang (102) nach Anspruch 11, **dadurch gekennzeichnet, dass** eine Getriebeausgangswelle (126) des Getriebes (110) als Nabenelement (14) und ein Generatorrotor (128) des Generators (112) als Wellenelement (12) ausgeführt ist.

14. Antriebsstrang (102) nach Anspruch 12 oder 13, **dadurch gekennzeichnet, dass** die Planstirnverzahnungen (16) der Verzahnungspaarungen (18) jeweils unmittelbar an die Hauptwelle (118) und den Planetenträger und/oder die Getriebeausgangwelle (126) und den Generatorrotor (128) angearbeitet sind.

15. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach einem der Ansprüche 10 bis 14 ausgebildet ist.
